# EUROPEAN PATENT APPLICATION

(11) **EP 4 668 186 A1**
(43) Date of publication of application: **24.12.2025**
(21) Application number: 25183027.9
(22) Date of filing: 16.06.2025
(51) Int. Cl.: G06Q 20/12, G06N 3/08, G06N 7/01, G06Q 20/40

(54) **MULTI-POINT RISK DETECTION FOR ELECTRONIC TRANSMISSIONS**

(30) Priority: 20.06.2024 US 202418748727
(71) Applicant: eBay Inc., San Jose, CA 95125 (US)
(72) Inventor: QU, Bo, SAN JOSE (US); YAGI, Daisuke, SAN JOSE (US); WANG, Zhurong, SAN JOSE (US); HAN, Zhichao, SAN JOSE (US); LIANG, Weiming, SAN JOSE (US); ZHAO, Yang, SAN JOSE (US); SHAN, Yinan, SAN JOSE (US); ZAHRADNIK III, Francis Joseph, SAN JOSE (US)
(74) Representative: Müller-Boré & Partner Patentanwälte PartG mbB

(57) **Abstract**

The technology described herein relates to systems, methods, and computer storage media, among other things, for determining whether an electronic transmission (e.g., associated with an electronic payment transaction) should be blocked (e.g., based on being a fraudulent transaction). In embodiments, a policy-based reinforcement learning risk decision agent is used to make these determinations for a plurality of stages associated with the electronic payment transaction (e.g., a pre-authorization stage, a post-authorization stage, and a delay-captured stage). The policy-based reinforcement learning risk decision agent can be trained using previous electronic payment transaction data for previous electronic payment transactions. For example, this particular agent can be trained using pre-authorization electronic payment transaction data, post-authorization electronic payment transaction data, and delay-captured electronic payment transaction data for each of the previous electronic payment transactions.

## Description

### BACKGROUND

Pre-authorization, also known as "pre-auth" or pre-authentication, is the process of verification associated with the validity of a payment method via electronic transmissions before the completion of a transaction. For example, an electronic payment may be initiated via an online banking portal, a mobile banking application, or a payment gateway on an e-commerce website or application. Based on electronic transmissions associated with a credit card or another form of payment associated with a bank or another entity, the bank or the other entity may assign a fraud score to the preauthorization request based on various risk assessments.

### SUMMARY

At a high level, aspects described herein relate to systems, methods, and computer storage media for, among other things, determining whether an electronic transmission (e.g., associated with an electronic payment transaction) should be blocked (e.g., based on being a fraudulent electronic payment transaction). For example, a policy-based reinforcement learning risk decision agent may be used to make these determinations for one or more stages associated with the electronic payment transaction (e.g., a pre-authorization stage, a post-authorization stage, and a delay-captured stage). The policy-based reinforcement learning risk decision agent can make determinations as to whether a value of impropriety for one or more current electronic transmissions is above a threshold, which may be used to cause the blocking or the facilitation of an electronic payment corresponding to the current electronic transmission.

In some embodiments, the policy-based reinforcement learning risk decision agent may be trained using previous electronic payment transaction data for previous electronic payment transactions. For example, the previous electronic payment transaction data may include post-authorization electronic payment transaction data. As another example, the previous electronic payment transaction data may additionally include one or more of pre-authorization electronic payment transaction data and delay-captured electronic transmission data. In some embodiments, Markov chain modeling is applied to the pre-authorization electronic payment transaction data, post-authorization electronic payment transaction data, and delay-captured electronic transmission data to distinguish this data within various stages of a previous electronic payment transaction for training the policy-based reinforcement learning risk decision agent. In some embodiments, during the post-authorization and delay-captured stages of a current electronic payment transaction, the policy-based reinforcement learning risk decision agent uses the pre-authorization electronic payment transaction data and the value of impropriety from the pre-authorization stage of the current electronic payment transaction for making value of impropriety determinations at the post-authorization and delay-captured stages.

In some embodiments, reinforcement learning may involve a first punishment upon the policy-based reinforcement learning risk decision agent providing a value of impropriety that is below a threshold for an actual fraudulent electronic payment transaction (e.g., during the pre-authorization stage) and a second punishment, which is less severe than the first punishment, upon the policy-based reinforcement learning risk decision agent providing a value of impropriety that is above a threshold for an actual non-fraudulent electronic payment transaction. In some embodiments, reinforcement learning may, additionally or alternatively, involve using a reward function that rewards the policy-based reinforcement learning risk decision agent for causing the actual fraudulent electronic payment transaction to be blocked.

In some embodiments, the current electronic payment transaction is blocked based on the value of impropriety (e.g., being above a threshold at the pre-authorization, the post-authorization stage, or the delay-captured stage of the current electronic payment transaction) or facilitated (e.g., through each of the pre-authorization, the post-authorization stage, or the delay-captured stages) based on the value of impropriety being below the threshold. In some embodiments, the current electronic payment transaction data and values of impropriety are used for reinforcement learning.

This summary is intended to introduce a selection of concepts in a simplified form that is further described in the Detailed Description section of this disclosure. The Summary is not intended to identify key or essential features of the claimed subject matter, nor is it intended to be an aid in determining the scope of the claimed subject matter. Additional objects, advantages, and novel features of the technology will be set forth in part in the description that follows, and in part will become apparent to those skilled in the art upon examination of the disclosure or learned through practice of the technology.

### BRIEF DESCRIPTION OF THE DRAWINGS

The present technology is described in detail below with reference to the attached drawing figures, wherein:
FIG. 1 illustrates an example operating environment associated with the policy-based reinforcement learning risk decision agent and risk assessment of electronic transmissions, in accordance with an embodiment described herein;
FIG. 2 illustrates an example flow diagram associated with the policy-based reinforcement learning risk decision agent and the risk assessment of electronic transmissions, in accordance with an embodiment described herein;
FIG. 3 illustrates example reward functions associated with the policy-based reinforcement learning risk decision agent, in accordance with an embodiment described herein;
FIG. 4 illustrates an example flowchart for risk assessment of electronic transmissions, in accordance with an embodiment described herein; and
FIG. 5 is an example computing device suitable for implementing the described technology, in accordance with an embodiment described herein.

### DETAILED DESCRIPTION

The detection of fraudulent transactions, such as fraudulent payment transactions, includes risk evaluation during pre-authorization of the electronic payment and sometimes during post-authorization of the electronic payment. Fraud detection during post-authorization includes the evaluation of a fraudulent activity after the approval of the electronic payment. For example, some post-authorization fraud detection can include the strategies used for preventing chargebacks, which occur when customers dispute transactions and request refunds from their payment providers. Managing e-commerce payments can be challenging. By detecting and preventing fraudulent transactions early on, the likelihood of fraudulent transactions, such as fraudulent payments, chargebacks, and associated financial losses can be reduced.

Some studies have shown that global fraudulent electronic payment losses on e-commerce platforms hit $41 million USD during 2022, and that this year it is expected to exceed $48 billion (North America comprising 42% of these values, followed by Europe at 26%). Further, some studies are predicting that that the cumulative losses to online payment fraud between now and 2027 will exceed $343 billion globally. For example, some electronic payment types (e.g., accepted by e-commerce platforms) include credit card, mobile commerce applications, gift cards, vouchers, third-party payments, buy-now-pay-later payments, digital wallets, cryptocurrency payments, direct debit, etc. As another example, some e-commerce merchants rely on payment processor or gateway connections and acquiring banks to support omnichannel payments.

Some examples of the types of fraudulent electronic payment losses that e-commerce merchants experience include phishing, first-party misuse, card testing, identity theft, account takeover, and loyalty fraud. Phishing may involve attackers who impersonate legitimate entities, such as banks or e-commerce websites, to trick individuals using client devices into providing sensitive information such as login credentials, credit card numbers, or other private and sensitive data. First-party misuse may involve legitimate account holders engaging in fraudulent activities using their own accounts by making unauthorized purchases, exploiting loopholes in refund policies, or engaging in other deceptive practices. Card testing may involve the use of stolen or fraudulent credit card information to start with making small, unauthorized transactions and then making larger fraudulent purchases or selling the card details to another unauthorized user. Loyalty fraud may involve the redemption of rewards points through illicit means, exploiting loopholes in program terms, or using stolen credentials to access loyalty accounts.

Current methods and systems used for preventing or mitigating fraudulent electronic payment losses do not involve the implementation of holistic integrations for final decision-making. For example, these current methods and systems may solely focus on pre-authorization assessments and only use certain pre-authorization data for these pre-authorization assessments. In addition, current methods and systems making both pre-authorization and post-authorization assessments use different modeling systems for each of the pre-authorization and post-authorization stages of the payment transaction without any communication between these two diverging systems. For example, the data from the post-authorization stage can include additional information that helps with the identification of fraudulent payment transactions that are not included during pre-authorization.

It is desirable (e.g., for both service platform providers and users of those services) to have particular electronic transmission management techniques capable of making determinations across all checkpoints or stages associated with an electronic payment transaction using information associated with all of those stages, such that inappropriate network traffic can be blocked without restricting legitimate and authorized users or other types of authorized traffic, and without failing to identify and block particular electronic transmissions and other types of risky network traffic, etc. For example, the technology discussed herein can perform enhanced electronic transmission management techniques that improve upon these shortcomings of the current methods and systems by, for example, blocking or facilitating particular electronic transmissions upon determining whether value of impropriety for the current electronic payment transaction is above a threshold by using a policy-based reinforcement learning risk decision agent that analyzes an electronic payment transaction during a pre-authorization stage (e.g., and during other subsequent stage(s)) based on previous electronic transmissions data that includes both pre-authorization electronic transmission data and electronic transmission data from subsequent stage(s).

To illustrate, by implementing the technology described herein, particular electronic transmissions and other types of risky network traffic can be properly blocked (e.g., at early stages during an electronic payment transaction and before initiating a request to a payment provider system), such that enhanced detections of transmissions, which should have been blocked by the current methods and systems but were facilitated by these current methods and systems, can be made. Further, the technology described herein can reduce computer component and network operational latencies by incorporating these enhanced detections, thereby improving both user experiences (e.g., user device experiences) and application services (e.g., service applications, such as an online marketplace, other types of service applications, etc.). By way of example, reducing the number of fraudulent electronic transmissions as a result of implementing the policy-based reinforcement learning risk decision agent can reduce the operational latencies (e.g., associated with e-commerce platform network components, client devices utilizing the e-commerce platform over the network, payment provider servers) that occur from these fraudulent electronic transmissions that are allowed to be facilitated via the current methods and systems.

As another example, the technology described herein can reduce the physical wear on storage components (e.g., storage components associated with the e-commerce platform), since the electronic transmission data accessed, processed, and stored by the policy-based reinforcement learning risk decision agent includes enhanced electronic transmission data assessments associated with particular electronic transmission data (e.g., both the pre-authorization and subsequent electronic transmission data) that more thoroughly identifies a fraudulent electronic transmission without having to store excessive amounts of data that do not lend to identifying fraudulent electronic transmissions. (Read/write heads, for example, are very mechanical in nature and subject to information access errors because of the precise movements they must make when locating cached data. Such information access errors are more likely to occur when there is excessive computer I/O due to data being stored without consideration of whether the data being stored is useful for identifying fraudulent electronic transmissions. Moreover, each input (e.g., searching for particular stored data without consideration of which particular stored data is useful with respect to a target goal) requires more memory operations, thereby unnecessarily consuming storage space.)

Having provided some example scenarios, a technology suitable for performing these examples is described in more detail with reference to the drawings. It will be understood that additional systems and methods for providing network management services can be derived from the following description of the technology.

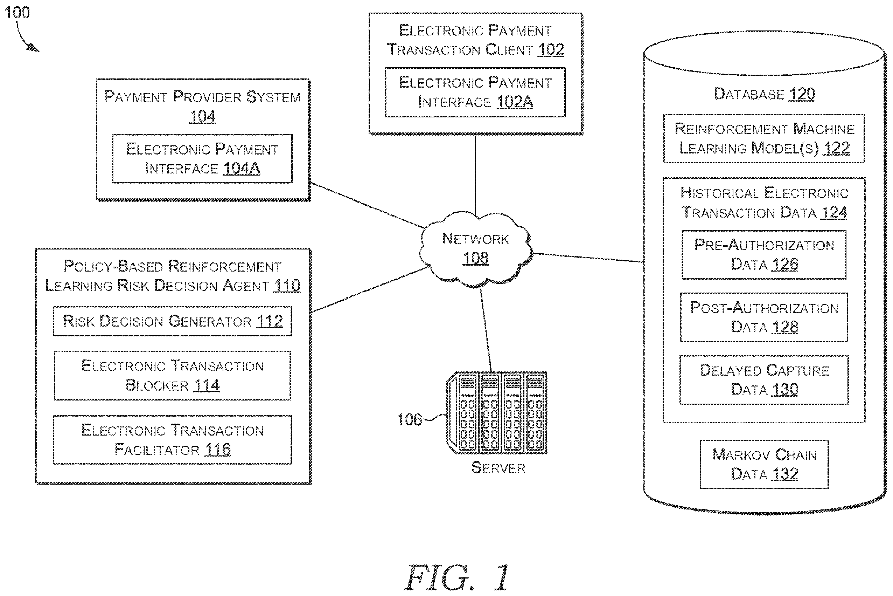

Turning now to FIG. 1, FIG. 1 illustrates an example operating environment 100 associated with the policy-based reinforcement learning risk decision agent and risk assessment of electronic transmissions in which implementations of the present disclosure may be employed. In particular, FIG. 1 illustrates a high-level architecture of example operating environment 100 having components in accordance with implementations of the present disclosure. The components and architecture of FIG. 1 are intended as examples, as noted toward the end of the Detailed Description.

Example operating environment 100 includes electronic payment transaction client 102 having an electronic payment interface 102A; payment provider system 104 having an electronic payment interface 104A; server 106; network 108; policy-based reinforcement learning risk decision agent 110 having risk decision generator 112, electronic transaction blocker 114, and electronic transaction facilitator 116; and database 120 having reinforcement machine learning model(s) 122, historical electronic transaction data 124 comprising pre-authorization data 126, post-authorization data 128, and delay capture data 130, and Markov chain data 132.

Other embodiments of example operating environment 100 may include additional payment provider system(s), additional client device(s), additional server(s), additional database(s), etc.

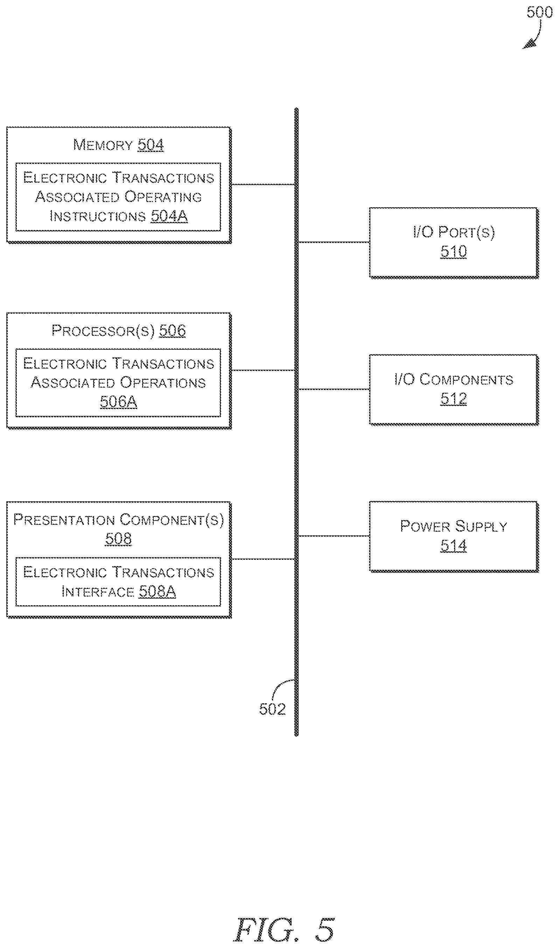

The electronic payment transaction client 102 may be a device that has the capability of accessing the network 108, and may also be referred to as a "computing device," "mobile device," "client device," "user equipment (UE)," "communication device," etc. The electronic payment transaction client 102 may, in some embodiments, take on a variety of forms, such as a personal computer, a laptop computer, a tablet, a mobile phone, a personal digital assistant, a server, or any other type of device that is capable of communication (e.g., by transmitting or receiving a signal) using the network 108. Broadly, the electronic payment transaction client 102 can include computer-readable media storing computer-executable instructions executed by at least one computer processor. One example of the electronic payment transaction client 102 includes computing device 500 described herein with reference to FIG. 5. The electronic payment transaction client 102 may be operated by a user, such as one or more of a person, machine, robot, another user device operator, or one or more combinations thereof.

As illustrated in example operating environment 100, the electronic payment transaction client 102 may be capable of communicating with the server 106 and the policy-based reinforcement learning risk decision agent 110 over the network 108. In some embodiments, the electronic payment transaction client 102 may be capable of communicating with the payment provider system 104 and the database 120. In some embodiments, the electronic payment transaction client 102 can be associated with one or more of a seller interface and buyer interface (e.g., associated with an e-commerce platform). In some embodiments, the electronic payment transaction client 102 can also cause the display of image data, text data, extended reality data, other types of data, or one or more combinations thereof (e.g., via the electronic payment interface 102A), based on one or more of the server 106 operations or the policy-based reinforcement learning risk decision agent 110 operations (e.g., operations associated with the risk decision generator 112, the electronic transaction blocker 114, or the electronic transaction facilitator 116).

In embodiments, the network 108 may include one or more of a local area network (LAN), a wide area network (WAN), a mesh network, a hybrid network, a plurality of networks, another type of network, or one or more combinations thereof. In some embodiments, one or more components (e.g., the electronic payment transaction client 102, the policy-based reinforcement learning risk decision agent 110, etc.) illustrated within the example operating environment 100 may communicate over the network 108 via the Internet or another public or private network. In some embodiments, the electronic payment transaction client 102 can be connected to the network 108, or portion thereof, for communication(s) with the policy-based reinforcement learning risk decision agent 110 via the electronic payment interface 102A. As another example, the payment provider system 104 can be connected to the network 108, or portion thereof, for communication(s) with the policy-based reinforcement learning risk decision agent 110 via the electronic payment interface 104A. Other embodiments of example operating environment 100 may include additional computing devices or network nodes that are capable of communicating (e.g., transmitting or receiving) with the policy-based reinforcement learning risk decision agent 110.

Generally, server 106 is a computing device that implements functional aspects of example operating environment 100 (e.g., implementing the functional aspects of the policy-based reinforcement learning risk decision agent 110). In embodiments, server 106 represents a backend or server-side device. In some embodiments, the server 106 can be an edge server. In embodiments, the server 106 may receive requests or transmissions from the electronic payment transaction client 102 (e.g., or transmit a request from the payment provider system 104 and receive a response from the payment provider system 104) and coordinate fulfillment (or denial) of those requests or transmissions (e.g., sometimes through other additional servers).

In embodiments, the payment provider system 104 may comprise computing devices (e.g., computing device 500 of FIG. 5). In embodiments, the payment provider system 104 may be a single server, a distributed computing environment encompassing multiple computing devices located at the same physical geographical location or at different physical geographical locations, another type of payment provider system, etc. In embodiments, the payment provider system 104 is a backend or server-side computing device. In other embodiments, the payment provider system 104 is a client-side or front-end device.

In embodiments, the payment provider system 104 and the policy-based reinforcement learning risk decision agent 110 utilize a payment gateway integration that serves as an intermediary between the server 106 and the payment provider system 104, such that the server 106 can transmit payment requests associated with the electronic payment transaction client 102 to the payment provider system 104, and such that the payment provider system 104 can provide responses, to the payment requests, to the server 106. In embodiments, the payment provider system 104 may include one or more of a core banking system, a transaction processing engine, a payment network, etc., or one or more combinations thereof. In embodiments, the payment provider system 104 and the server 106 may utilize a communication protocol (e.g., Hypertext Transfer Protocol Secure (HTTPS), Transport Layer Security (TLS), Secure Sockets Layer (SSL)) for the encryption of data transmitted between the payment provider system 104 and the server 106 via the payment gateway.

In embodiments, the payment provider system 104 may verify the authenticity of an electronic payment transaction request (e.g., including an availability of funds or credit for the transaction). This verification by the payment provider system 104 may occur after the pre-authorization stage of the electronic payment transaction. In embodiments, the payment provider system 104 processes the electronic payment transaction request from the server 106 and generates a response to this request (e.g., approving or declining the request). In embodiments, the payment gateway relays the response to the server 106. In embodiments, the request may include an authorization code, transaction status, an additional request for additional information, etc.

In some embodiments, the payment provider system 104 may rank an e-commerce platform associated with the server 106 based on electronic payment transactions associated with the platform. For example, the payment provider system 104 may consider the volume of electronic payment transactions associated with the e-commerce platform, a comparison of electronic payment transactions attempted to the number of electronic payment transactions processed over a period of time, an electronic payment transaction processing time by the e-commerce platform, electronic payment transaction security implementations utilized by the e-commerce platform (e.g., Payment Card Industry Data Security Standard compliance, multi-factor authentication, encryption protocols, etc.), the ability of the e-commerce platform to detect and prevent fraudulent activities, etc.

In embodiments, the server 106 can comprise computing devices (e.g., computing device 500 of FIG. 5). In some embodiments, the server 106 may be a single server, a distributed computing environment encompassing multiple computing devices located at the same physical geographical location or at different physical geographical locations, another type of server environment, etc. In some embodiments, the server 106 can connect to the database 120 or, in other embodiments, the server 106 can be in communication with a plurality of servers that each share the database 120 or that each have their own database. In embodiments, the server 106 is a backend or server-side computing device and the electronic payment transaction client 102 is a client-side or front-end device. It will be understood that some implementations of the technology will comprise either a client-side or front-end computing device, a backend or server-side computing device, or both executing any combination of functions associated with example operating environment 100, among other functions or combination(s) of functions.

The database 120 may be capable of storing data (e.g., reinforcement machine learning model(s) 122, historical electronic transaction data 124, and Markov chain data 132), computer instructions (e.g., software program instructions, routines, or services), or other types of data associated with the embodiments described herein. For instance, database 120 may store computer instructions for implementing functional aspects of the policy-based reinforcement learning risk decision agent 110. Although depicted as a single database component, database 120 may be embodied as multiple databases (e.g., a distributed computing environment encompassing multiple computing devices), may be in the cloud, etc., or one or more combinations thereof. In other embodiments, one or more of the reinforcement machine learning model(s) 122 may be stored in a separate database.

The policy-based reinforcement learning risk decision agent 110 can access the database 120 to execute tasks associated with one or more neural networks (e.g., reinforcement machine learning model(s) 122). For example, a user - via the electronic payment transaction client 102 (e.g., a prompt interface associated with the electronic payment interface 102A) - can communicate a request (e.g., a request to purchase a merchant offer on an e-commerce market) to the policy-based reinforcement learning risk decision agent 110 for processing of the request. Based on communicating the request, the policy-based reinforcement learning risk decision agent 110 can execute operations (e.g., via the risk decision generator 112, the electronic transaction blocker 114, or the electronic transaction facilitator 116) using one or more components of the database 120 (e.g., the reinforcement machine learning model(s) 122, historical electronic transaction data 124, or Markov chain data 132) - to facilitate or block one or more electronic transmissions associated with the request.

As another example, the policy-based reinforcement learning risk decision agent 110 may receive an indication of a current electronic payment transaction (e.g., via the electronic payment interface 102A for an offer from a merchant via an e-commerce platform). By way of example, the indication received may correspond to a checkout process associated with a selected item (e.g., a good, a software product, a tangible item, an intangible item (e.g., computer software, an electronic document, a video of a movie, an audio of a song, an electronic photograph, artwork or another digital asset represented by a non-fungible token, etc.), another type of offer provided via an e-commerce platform, or one or more combinations thereof), wherein the checkout process is associated with the user providing shipping information (e.g., an email address or a physical address) and billing information. As another example, the indication received may correspond to a selection (e.g., via the electronic payment interface 102A) of a payment method (e.g., a selection from options provided by an e-commerce platform).

In some embodiments, the current electronic payment transaction and previous electronic payment transactions may correspond to a credit card, a mobile commerce application payment method, a gift card payment, a voucher payment, a third-party payment, a buy-now-pay-later payment, a digital wallet payment, a cryptocurrency payment, a direct debit, an omnichannel payment, a cash-on-delivery payment, an electronic funds transfer, etc., or one or more combinations thereof.

Based on a current electronic payment transaction (e.g., based on receiving the indication of the current electronic payment transaction), the policy-based reinforcement learning risk decision agent 110 can execute one or more operations (e.g., via the risk decision generator 112, the electronic transaction blocker 114, or the electronic transaction facilitator 116) using one or more components of the database 120 (e.g., the reinforcement machine learning model(s) 122, historical electronic transaction data 124, or Markov chain data 132) to facilitate or block the current electronic payment transaction based on one or more values of impropriety determined by the policy-based reinforcement learning risk decision agent 110 (e.g., blocking the current electronic payment transaction during a pre-authorization stage of the current payment transaction).

In embodiments, the policy-based reinforcement learning risk decision agent 110 is capable of receiving electronic communications (e.g., an API request, an HTTP request, an authentication request (e.g., login attempt, password reset, payment information, etc.), an authentication response associated with the electronic payment interface 104A, customer reviews associated with the electronic payment interface 102A, seller listings via an electronic payment interface, email or digital assistant communications, geolocation information, a payment submission associated with the electronic payment transaction client 102, a payment verification associated with the electronic payment interface 104A, a resource access request, a domain name system request, a search request corresponding to a search engine, other types of electronic communications, etc.) associated with the electronic payment transaction client 102, the payment provider system 104, another device or system, etc. The policy-based reinforcement learning risk decision agent 110 may also be capable of coordinating, monitoring, or otherwise managing fulfillment (e.g., blocking a particular electronic transmission or not blocking it) of those electronic communications (e.g., sometimes through servers other than server 106).

In embodiments, the policy-based reinforcement learning risk decision agent 110 may determine a value of impropriety for a current electronic transmission (e.g., associated with the electronic payment transaction client 102) corresponding to whether the electronic transmission is a fraudulent or non-fraudulent electronic transmission (e.g., a fraudulent payment transaction request on an e-commerce platform). For example, determining the value of impropriety may correspond to a fraudulent payment transaction associated with phishing, first-party misuse, card testing, identity theft, account takeover, loyalty fraud, friendly fraud by way of using a legitimate payment method that is later disputed with the bank based on the appropriate card hold purportedly not authorizing the transaction or not receiving the item or service as described, triangulation fraud associated with stolen payment details, account creation fraud, interception fraud associated with intercepted payment transactions being redirected to a different account, other types of fraudulent electronic transmissions, or one or more combinations thereof.

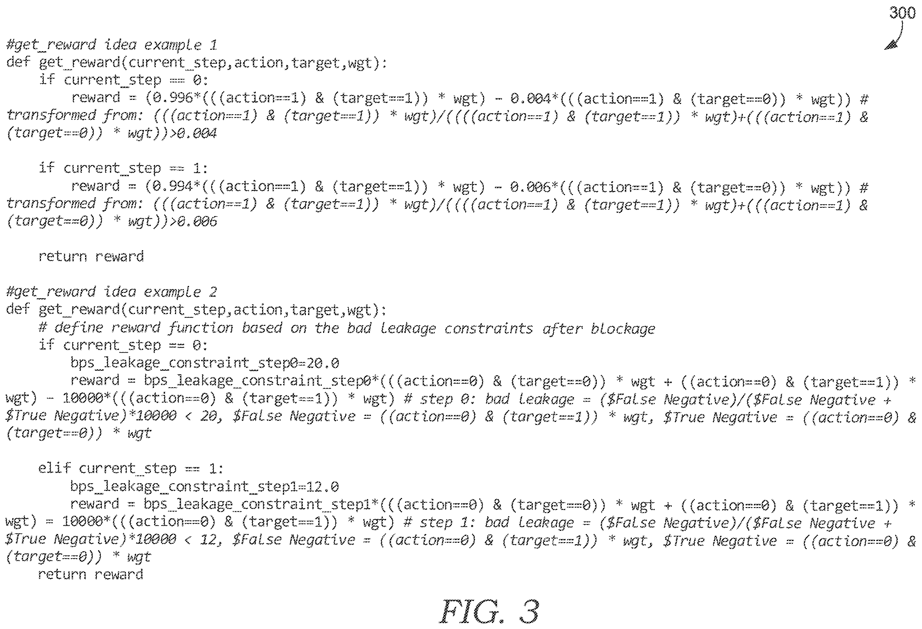

The policy-based reinforcement learning risk decision agent 110 may leverage reinforcement machine learning model(s) 122, historical electronic transaction data 124, and Markov chain data 132 for operations associated with the risk decision generator 112 and determining a value of impropriety for a particular current electronic transmission. For example, the reinforcement machine learning model(s) 122 may include a gradient ascending algorithm for optimizing parameters of a policy or value function associated with a reward (e.g., cumulative reward) by mapping states to actions using gradient ascent. In some embodiments, the mapping of the states to actions may include a pre-authorization stage, a post-authorization stage, and a delay-captured stage of an electronic payment transaction, and the actions may include blocking or facilitating the electronic payment transaction. In some embodiments, the reward corresponds to one or more of the example reward functions 300 of FIG. 3.

In some embodiments, the reinforcement machine learning model(s) 122 may include one or more of a vanilla policy gradient algorithm that updates policy parameters in the direction of the gradient to increase the likelihood of the actions (e.g., blocking or facilitating the electronic payment transaction) that lead to higher rewards (e.g., a higher reward for blocking actual fraudulent electronic payment transactions during a pre-authorization stage associated with the actual fraudulent electronic payment transaction than for facilitating an actual non-fraudulent electronic payment, a higher reward for blocking actual fraudulent electronic payment transactions during a pre-authorization stage associated with the actual fraudulent electronic payment transaction than for a stage after the pre-authorization stage). In some embodiments, the reinforcement machine learning model(s) 122 may additionally or alternatively include one or more of a proximal policy optimization (PPO) that adds a constraint on a change in policy parameter(s) to ensure stable updates and to prevent large policy changes.

In some embodiments, the reinforcement machine learning model(s) 122 may additionally or alternatively include one or more of an actor-critic method combining policy gradient with value function estimation associated with the value of impropriety. For example, the actor (policy) is updated using the policy gradient, while the critic (value function associated with the value of impropriety) can be used for estimations of an expected future reward (e.g., associated with properly blocking fraudulent electronic payment transactions or properly facilitating the electronic payment transaction). As another example for the actor-critic method embodiments, one or more algorithms including an Advantage Actor-Critic (A2C) and Asynchronous Advantage Actor-Critic (A3C) may be used for the gradient ascent to update both the actor and critic networks. In some embodiments, the actor-critic method can be implemented via the policy-based reinforcement learning risk decision agent 110 (e.g., via the risk decision generator 112) for a Markov chain model, stored within the Markov chain data 132, above a threshold length. For example, the Markov chain model may include pre-authorization stage data for particular electronic transmissions, post-authorization stage data for the particular electronic transmissions, and delay-captured stage data for the particular electronic transmissions. Additional details of the Markov chain models that can be stored within the Markov chain data 132 are described below in more detail.

In some embodiments, the reinforcement machine learning model(s) 122 may additionally or alternatively include one or more of a Deep-Q-Network (DQN) reinforcement learning algorithms (e.g., a vanilla DQN, a double DQN, a dueling DQN, a distributional DQN, a NoisyNet DQN, a Prioritized Experience Replay (PER), a Rainbow DQN, or one or more combinations thereof). For example, a distributional DQN may be used, by the risk decision generator 112, for determining a value of impropriety based on a full distribution of returns associated with pre-authorization data 126, post-authorization data 128, and delay capture data 130 associated with a plurality of previous electronic payment transactions rather than just an expected return. As another example, the dueling DQN may be used by the risk decision generator 112 for determining a value of impropriety based on decomposing the Q-value function into separate estimates of the value of impropriety being in a state (e.g., the pre-authorization stage, the post-authorization stage, the delayed-capture stage) and the advantage of taking each action associated with blocking an electronic transmission versus facilitating an electronic transmission (and, in some embodiments, the advantage of taking each action during a particular stage). In yet another example, the Vanilla DQN may be used by the risk decision generator 112 for the utilization of a replay buffer and target network for stabilizing training and improving sample efficiencies (e.g., the sampling of particular previous electronic transmission data having particular post-authorization data 128).

In embodiments, the risk decision generator 112 may provide a value of impropriety for a current electronic payment transaction during one or more of a pre-authorization stage, post-authorization stage, and delay-captured stage of the current electronic payment transaction. In some embodiments, the risk decision generator 112 utilizes the reinforcement machine learning model(s) 122 to generate the value of impropriety during the pre-authorization stage and prior to the server 106 communicating with the payment provider system 104 (e.g., via the payment gateway). For example, the risk decision generator 112 may generate the value of impropriety prior to the payment provider system 104 verifying the authenticity of an electronic payment transaction request for the current electronic payment transaction. As another example, the risk decision generator 112 may generate the value of impropriety prior to the payment provider system 104 processing the electronic payment transaction request from the server 106, prior to the payment provider system 104 generating a response to the electronic payment transaction request, and prior to the server 106 transmitting the electronic payment transaction request to the payment gateway for relay to the payment provider system 104. In some embodiments, the risk decision generator 112 may generate the value of impropriety during checkout process associated with an item selected via the electronic payment transaction client 102.

In embodiments, the value of impropriety is generated based on training a neural network (e.g., the reinforcement machine learning model(s) 122) using previous electronic transmissions data (e.g., pre-authorization data 126, post-authorization data 128, and delay capture data 130). For example, the previous electronic transmissions data may include both fraudulent and non-fraudulent previous electronic transmissions. In some embodiments, the reinforcement machine learning model(s) 122 may be trained using pre-authorization data 126, post-authorization data 128, and delay capture data 130 for previous fraudulent electronic payment transactions associated with phishing. Additionally or alternatively, the reinforcement machine learning model(s) 122 may be trained using pre-authorization data 126, post-authorization data 128, and delay capture data 130 for previous fraudulent electronic payment transactions associated with one or more of loyalty fraud, friendly fraud, first-party misuse, card testing, identity theft, account takeover, triangulation fraud, account creation fraud, interception fraud, other types of fraudulent electronic transmissions, or one or more combinations thereof.

The pre-authorization data 126 may correspond to the pre-authorization stage for each of the previous electronic transmissions (e.g., previous electronic payment transactions) associated with a time period before the server 106 communicates with the payment provider system 104. For example, the pre-authorization data 126 may include previous values of impropriety determined for the previous electronic payment transactions during the pre-authorization stage. As another example, the pre-authorization data 126 may include the transaction amount, the transaction date and time, currency, a transaction ID, merchant details, transaction type (e.g., credit card, mobile commerce application payment method, gift card, voucher, a third-party, a buy-now-pay-later, a digital wallet, cryptocurrency, direct debit, omnichannel payment, cash-on-delivery payment, electronic funds transfer, etc., or one or more combinations thereof), name (e.g., surname and given name), associated age, associated phone number, a shipping addresses, a billing address, other billing information, indicated payment preferences, previous payment and billing information used during prior transactions by the same user or user device, age of an account associated with the user or user device, transaction action (e.g., blocked, facilitated), a suspicious or anomalous transaction pattern associated with the same user or user device, IP address, device fingerprint, transaction metadata (e.g., contextual information associated with the electronic payment transaction, product description, stock keeping unit (SKU) number, transaction notes, user-generated content), historical customer behavior, customer purchase patterns, customer product preferences, historical credit card usage activity rate, other types of pre-authorization data 126, or one or more combinations thereof.

The post-authorization data 128 may correspond to the post-authorization stage for each of the previous electronic transmissions (e.g., previous electronic payment transactions) associated with a time period after the server 106 communicates with the payment provider system 104. In addition, the delay capture data 130 may correspond to the delayed-capture stage for each of the previous electronic transmissions (e.g., previous electronic payment transactions) associated with a time period after the server 106 communicates with the payment provider system 104 and associated with a time period after the post-authorization stage (e.g., a few hours after the payment provider system 104 provides the response to the electronic payment transaction request). For example, the delayed-capture stage may correspond to a delaying of the actual capture or settlement of funds at a time after the authorization of the electronic payment at the time of purchase. As another example, the delayed-capture stage may correspond to a customer making a purchase and having the payment method authorized without the immediate transfer of funds from the customer account to the merchant account.

In some embodiments, the post-authorization data 128 may include previous values of impropriety determined for the previous electronic payment transactions during the post-authorization stage. In embodiments, the post-authorization data 128 may include authenticity verification data provided by the payment provider system 104 via an electronic payment transaction request after the pre-authorization stage for the previous electronic payment transactions. In some embodiments, the post-authorization data 128 may include the encrypted data transmitted between the payment provider system 104 and the server 106 via the payment gateway. In some embodiments, the post-authorization data 128 may include an authorization code, transaction status, an additional request for additional information, etc., included in a response to an electronic payment transaction request transmitted by the payment provider system 104.

In some embodiments, the post-authorization data 128 may include the transaction amount, currency, the date and time associated with the electronic payment transaction request or the response to the electronic payment transaction request, currency, a transaction ID, merchant details, details associated with the payment provider system 104, transaction type, associated name(s) and phone number, other billing information, previous payment and billing information used during prior transactions by the same user or user device, transaction status (e.g., authorized, declined, disputed, settled, refunded, etc.) associated with the response to the electronic payment transaction request, transaction action (e.g., blocked, facilitated) associated with the post-authorization stage, a suspicious or anomalous transaction pattern associated with the same user or user device, IP address, device fingerprint, post-authorization stage metadata, historical customer behavior, customer purchase patterns, customer product preferences, other types of post-authorization data 128, or one or more combinations thereof.

In some embodiments, the delay capture data 130 may include previous values of impropriety determined for the previous electronic payment transactions during the delayed-capture stage. In some embodiments, the delay capture data 130 may include authentication data, verification data, transaction action data (e.g., blocked or facilitated), transaction status (e.g., authorized, declined, disputed, settled, refunded, etc.), etc., associated with the delayed actual capture or settlement of funds. In some embodiments, the delay capture data 130 may include the transaction amount associated with the delayed actual capture, currency associated with the delayed actual capture, the date and time associated with the associated with the delayed actual capture, currency associated with the delayed actual capture, a transaction ID associated with the delayed actual capture, merchant details associated with the delayed actual capture, details associated with the payment provider system 104, transaction type associated with the delayed actual capture, other billing information, previous payment and billing information used during prior transactions by the same user or user device, transaction status (e.g., authorized, declined, disputed, settled, refunded, etc.) associated with the associated with the delayed actual capture, transaction action (e.g., blocked, facilitated) associated with the associated with the delayed actual capture, a suspicious or anomalous transaction pattern associated with the same user or user device, IP address, device fingerprint associated with the delayed actual capture, delayed-capture stage metadata, historical customer behavior or purchase patterns, additional customer behavior between the authorization of the electronic payment at the time of purchase and the delaying of the actual capture or settlement of funds, other types of delay capture data 130, or one or more combinations thereof.

In embodiments, the Markov chain data 132 may be generated by applying Markov chain modeling to a plurality of previous electronic transmissions for distinguishing one or more of a pre-authorization stage, a post-authorization stage, and a delayed-capture stage for each of the previous electronic transmissions. For example, the Markov chain modeling may distinguish one or more of the pre-authorization data 126 (e.g., pre-authorization electronic transmission data received via electronic payment interface 102A for an electronic payment transaction), the post-authorization data 128 (e.g., post-authorization electronic transmission data for the electronic payment transaction), or the delay capture data 130 (e.g., delayed-capture electronic transmission data for the electronic payment transaction). In some embodiments, the Markov chain modeling is applied to each of a plurality of previous fraudulent electronic transmissions associated with an electronic payment transaction and one or more of phishing, loyalty fraud, friendly fraud, first-party misuse, card testing, identity theft, account takeover, triangulation fraud, account creation fraud, interception fraud, other types of fraudulent electronic transmissions, or one or more combinations thereof.

In some embodiments, the Markov chain modeling is applied to the previous fraudulent electronic transmissions that were previously blocked (e.g., during the pre-authorization stage, post-authorization stage, or delayed-capture stage). In some embodiments, the Markov chain modeling is additionally or alternatively applied to the previous fraudulent electronic transmissions that were previously facilitated (e.g., through each of the pre-authorization stage, post-authorization stage, or delayed-capture stage). In some embodiments, the Markov chain modeling is additionally or alternatively applied to previous non-fraudulent electronic transmissions that were previously blocked (e.g., during the pre-authorization stage, post-authorization stage, or delayed-capture stage). In some embodiments, the Markov chain modeling is additionally or alternatively applied the previous non-fraudulent electronic transmissions that were previously facilitated (e.g., through each of the pre-authorization stage, post-authorization stage, or delayed-capture stage).

In embodiments, a generated Markov chain associated with each of the previous electronic payment transactions can be used to train the reinforcement machine learning model(s) 122 for generating one or more values of impropriety for a current electronic payment transaction. For example, a Markov chain can include a plurality of stages (e.g., the pre-authorization stage, post-authorization stage, and delayed-capture stage) that are each associated with a particular time period for the previous electronic payment transaction (e.g., the pre-authorization stage associated with a time period before the communications between server 106 and the payment provider system 104, the post-authorization stage associated with a time period after the communications between server 106 and the payment provider system 104, and delayed-capture stage associated with a time period after the post-authorization stage). In addition, each of the plurality of stages for the Markov chain may be associated with a particular action (e.g., electronic payment transaction blocked or facilitated) and a particular reward function (e.g., one or more of the example reward functions 300 of FIG. 3).

In some embodiments, the Markov chains used to train the reinforcement machine learning model(s) 122 may be provided to the reinforcement machine learning model(s) 122 based on a data-loader for batch transaction processing. For example, some Markov chains may be batched based on the reward associated with the previous electronic payment transactions (e.g., batched based on previous electronic payment transactions that properly blocked an actual fraudulent electronic payment transaction during a pre-authorization stage). As another example, the Markov chains may be batched based on the number of punishments associated with failing to block an actual fraudulent electronic payment transaction during a pre-authorization stage. In yet another example, the Markov chains may be batched based on the action (e.g., blocking) associated with one or more of the Markov chain stages. In some embodiments, the Markov chains may be batched based on user device location or associated billing information corresponding to the particular electronic payment transaction. In some embodiments, the Markov chains may be batched based on the particular item being purchased during each of the previous electronic payment transactions.

In embodiments, as the risk decision generator 112 is determining a value of impropriety for the current electronic transmission during the post-authorization stage (e.g., in real time), the policy-based reinforcement learning risk decision agent 110 is aware of the value of impropriety determined for the current electronic transmission during the pre-authorization stage, and the risk decision generator 112 can determine the value of impropriety for the post-authorization stage based on information related to the value of impropriety for the pre-authorization stage. Additionally, in embodiments, as the risk decision generator 112 is determining a value of impropriety for the current electronic transmission during the delayed-capture stage, the policy-based reinforcement learning risk decision agent 110 is aware of the value of impropriety determined for the pre-authorization stage and the post-authorization stage, and the risk decision generator 112 can determine the value of impropriety for the delayed-capture stage based on information related to the value of impropriety for each of the pre-authorization stage and the post-authorization stage. In embodiments, the policy-based reinforcement learning risk decision agent 110 stores each of these values of impropriety, and associated data, in the database 120.

In embodiments, determinations by the risk decision generator 112, in real time during the current electronic payment transaction, can be used for implementing actions by the electronic transaction blocker 114 and the electronic transaction facilitator 116. For example, based on the risk decision generator 112 determining that the value of impropriety for a current electronic transmission is above a threshold, the electronic transaction blocker 114 may block the current electronic transmission (e.g., at a pre-authorization stage, post-authorization stage, or a delayed-capture stage of the current electronic transmission). As another example, based on the risk decision generator 112 determining that the value of impropriety for a current electronic transmission is not above the threshold, the electronic transaction facilitator 116 may facilitate the current electronic transmission (e.g., by facilitating the electronic payment transaction through each of the pre-authorization stage and post-authorization stage). As another example, the electronic transaction blocker 114 and the electronic transaction facilitator 116 can be used for additional current electronic payment transactions based on the determinations by the risk decision generator 112.

For example, in some embodiments, the policy-based reinforcement learning risk decision agent 110 may identify another current electronic transmission (e.g., based on an input via the electronic payment interface 102A) corresponding to an electronic payment via an e-commerce platform (e.g., associated with server 106). Based on identifying the other current electronic transmission, the policy-based reinforcement learning risk decision agent 110 may provide current electronic transmission data, corresponding to the other current electronic transmission, to the reinforcement machine learning model(s) 122 for determining, via the risk decision generator 112, whether the generated value of impropriety is above a threshold. Upon determining that this value of impropriety is above the threshold, the electronic transaction blocker 114 may block this other current electronic transmission. Upon determining that this value of impropriety is not above the threshold, the electronic transaction facilitator 116 may facilitate this other current electronic transmission.

In embodiments, the reinforcement machine learning model(s) 122 may be trained using a reward for the subsequent blocking of actual fraudulent electronic payment transactions during a pre-authorization stage associated with the actual fraudulent electronic payment transactions. For example, upon the policy-based reinforcement learning risk decision agent 110 blocking current, actual fraudulent electronic payment transactions, the reinforcement machine learning model(s) 122 may be rewarded based on the based on the value of impropriety generated by the reinforcement machine learning model(s) 122 for reinforcement learning. In some embodiments, the reward for blocking actual fraudulent electronic payment transactions at the pre-authorization stage may be greater than the reward for blocking actual fraudulent electronic payment transactions at a later stage. In some embodiments, the reward for blocking actual fraudulent electronic payment transactions is greater than the reward for facilitating actual non-fraudulent electronic payment transactions.

In some embodiments, reinforcement machine learning model(s) 122 is punished when it provides a value of impropriety that is below the threshold for actual fraudulent electronic payment transactions. In some embodiments, the punishment is more severe for values of impropriety being below the threshold for actual fraudulent electronic payment transactions during the pre-authorization stage than corresponding punishment during a later stage. In some embodiments, the punishment for providing values of impropriety below the threshold for actual fraudulent electronic payment transactions is more severe than the punishment for providing values of impropriety above the threshold for actual non-fraudulent electronic payment transactions.

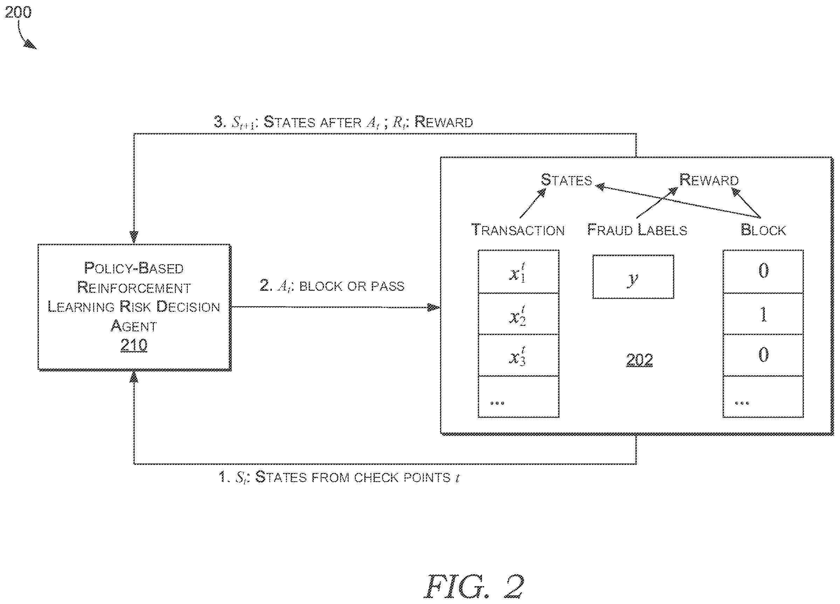

FIG. 2 depicts an example flow diagram 200 that is associated with the policy-based reinforcement learning risk decision agent 210 and the risk assessment of electronic transmissions (e.g., electronic payment transactions). In embodiments, the policy-based reinforcement learning risk decision agent 210 is the same or similar to the policy-based reinforcement learning risk decision agent 110 of FIG. 1.

Box 202 includes states and rewards. In some embodiments, these states and rewards correspond to the previous electronic transmissions. For example, the states of previous electronic payment transactions may include a pre-authorization stage, a post-authorization stage, and a delayed-capture stage. The pre-authorization stage may include pre-authorization data 126 (described above for FIG. 1) for each previous electronic payment transaction, the post-authorization stage may include post-authorization data 128 for each previous electronic payment transaction, and the delayed-capture stage may include delay capture data 130 for each previous electronic payment transaction, and illustrated under the "transaction" column in box 202.

In embodiments, the rewards in box 202 may correspond to whether actual fraudulent previous electronic transmissions were properly blocked (e.g., during the pre-authorization stage) and whether actual non-fraudulent previous electronic transmissions were properly facilitated. In addition, the rewards in box 202 may also correspond to greater rewards for blocking actual fraudulent previous electronic transmissions. As illustrated in FIG. 2, each of the previous electronic transmissions may be labeled based on whether a particular previous electronic transmission was fraudulent or not. In addition, each of the transaction states (e.g., pre-authorization stage, a post-authorization stage, and a delayed-capture stage) may have a corresponding label that indicates whether the previous electronic transmission was blocked at that state or not (e.g., 1 indicating blocked and 0 indicating not blocked).

As illustrated in the example flow diagram 200, the data within box 202 is provided to the policy-based reinforcement learning risk decision agent 210 for determining whether a current electronic transmission is to be blocked or facilitated. For example, the policy-based reinforcement learning risk decision agent 210 is provided previous electronic transmission data within box 202 and determines whether the current electronic transmission is to be blocked or facilitated at each of a pre-authorization stage, a post-authorization stage, and a delayed-capture stage for the current electronic transmission. The policy-based reinforcement learning risk decision agent 210 is provided previous electronic transmission data for each state after a reward (or punishment) is applied for each action taken at each state for each of the previous electronic transmissions. In some embodiments, Markov chain modeling is applied to each state for each of the previous electronic transmissions prior to providing the policy-based reinforcement learning risk decision agent 210 the previous electronic transmission data.

### Example Flow Chart

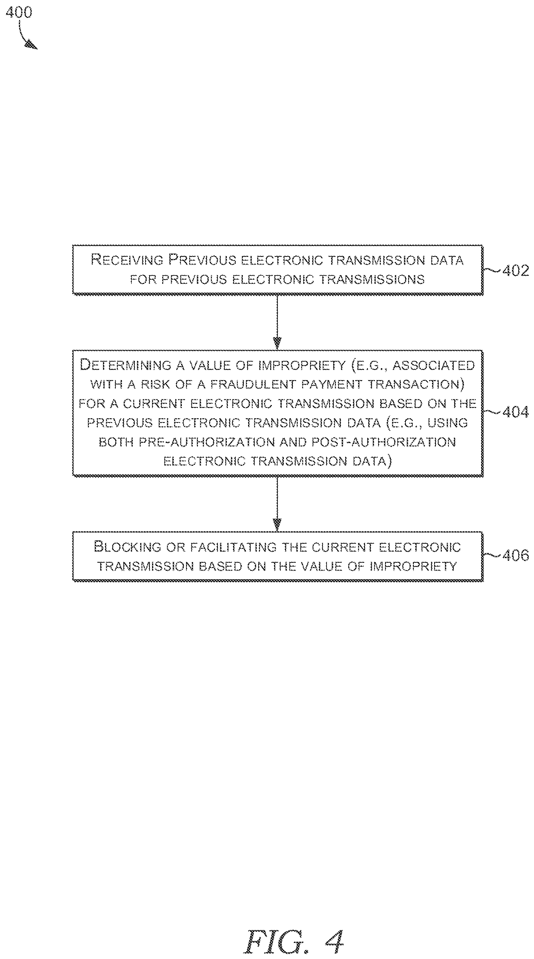

Flowchart 400 of FIG. 4 begins at step 402 with receiving previous electronic transmission data for previous electronic transmissions. For example, the previous electronic transmission data may correspond to historical electronic transaction data 124 or Markov chain data 132 of FIG. 1. To illustrate, the reinforcement machine learning model(s) 122 of FIG. 1 may be trained using one or more of post-authorization data 128 of previous electronic payment transactions and delay capture data 130 of the previous electronic payment transactions. Additionally or alternatively, the reinforcement machine learning model(s) 122 of FIG. 1 may be trained using pre-authorization data 126 of the previous electronic payment transactions. In some embodiments, the reinforcement machine learning model(s) 122 of FIG. 1 may be trained using the Markov chain data 132 of FIG. 1. For instance, a first state of a Markov chain model may include pre-authorization data for the previous electronic payment transactions, a second state of the Markov chain model may include post-authorization data for the previous electronic payment transactions, and a third state of the Markov chain model may include delayed-capture data for the previous electronic payment transactions. As another illustration, a first state of a Markov chain model may include pre-authorization data for the previous electronic payment transactions and a second state may include both post-authorization data and delayed-capture data.

Step 404 includes determining a value of impropriety for a current electronic transmission based on the previous electronic transmission data for the previous electronic transmissions. For example, the value of impropriety may be associated with a risk of a fraudulent payment transaction, and the previous electronic transmission data may include previous electronic payment transaction data for previous electronic payment transactions. In some embodiments, the value of impropriety may be determined using the policy-based reinforcement learning risk decision agent 110 of FIG. 1 (e.g., using the risk decision generator 112 and the reinforcement machine learning model(s) 122). In some embodiments, the value of impropriety may be compared to a threshold ((e.g., using the risk decision generator 112 of FIG. 1) for determining whether to block or facilitate the current electronic payment transaction.

Step 406 includes blocking or facilitating the current electronic transmission based on the value of impropriety. For example, the blocking may be performed using the electronic transaction blocker 114 of FIG. 1. As another example, the current electronic transmission may be blocked based on the value of impropriety being above a threshold. In yet another example, the facilitation may be performed using the electronic transaction facilitator 116 of FIG. 1. As another example, the current electronic transmission may be facilitated based on the value of impropriety being below the threshold.

### Example Computing Device

Having described an overview of embodiments of the present technology, an example operating environment in which embodiments of the present technology may be implemented is described below in order to provide a general context for various aspects. Referring initially to FIG. 5, in particular, an example operating environment for implementing embodiments of the present technology is shown and designated generally as computing device 500. Computing device 500 is but one example of a suitable computing environment and is not intended to suggest any limitation as to the scope of use or functionality of the technology. Neither should computing device 500 be interpreted as having any dependency or requirement relating to any one or combination of components illustrated.

The technology of the present disclosure may be described in the general context of computer code or machine-useable instructions, including computer-executable instructions such as program modules, being executed by a computer or other machine, such as a personal data assistant or other handheld device. Generally, program modules including routines, programs, objects, components, data structures, etc. refer to code that perform particular tasks or implement particular abstract data types. The technology may be practiced in a variety of system configurations, including hand-held devices, consumer electronics, general-purpose computers, more specialty computing devices, etc. The technology may also be practiced in distributed computing environments where tasks are performed by remote-processing devices that are linked through a communications network.

With reference to FIG. 5, computing device 500 includes bus 502 that directly or indirectly couples the following devices: memory 504 (e.g., including electronic transactions associated operating instructions 504A), one or more processors 506 (e.g., including electronic transactions associated operations 506A), one or more presentation components 508 (e.g., including electronic transactions interface 508A), input/output ports 510, input/output components 512, and illustrative power supply 514.

Bus 502 represents what may be one or more busses (such as an address bus, data bus, or combination thereof). Although the various blocks of FIG. 5 are shown with lines for the sake of clarity, in reality, delineating various components is not so clear, and metaphorically, the lines would more accurately be grey and fuzzy. For example, one may consider a presentation component, such as a display device, to be an I/O component. As another example, processors may also have memory. Such is the nature of the art, and it is again reiterated that the diagram of FIG. 5 is merely illustrates an example computing device that can be used in connection with one or more embodiments of the present technology. Distinction is not made between such categories as "workstation," "server," "laptop," "hand-held device," etc., as all are contemplated within the scope of FIG. 5 and reference to "computing device."

Computing device 500 typically includes a variety of computer-readable media. Computer-readable media can be any available media that can be accessed by computing device 500 and includes both volatile and nonvolatile media, and removable and non-removable media. By way of example, and not limitation, computer-readable media may comprise computer storage media and communication media.

Computer storage media include volatile and nonvolatile, removable and non-removable media implemented in any method or technology for storage of information, such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computing device 500. Computer storage media excludes signals per se.

Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and other transmissions. Combinations of any of the above should also be included within the scope of computer-readable media.

Memory 504 includes computer storage media in the form of volatile or nonvolatile memory. The memory 504 may be removable, non-removable, or a combination thereof. Example hardware devices include solid-state memory, hard drives, optical-disc drives, etc. Computing device 500 includes one or more processors that read data from various entities such as memory 504 or I/O components 512.

In embodiments, the electronic transactions associated operating instructions 504A, when used by the one or more processors 506, causes the one or more processors 506 to perform operations comprising the electronic transactions associated operations 506A. For example, the one or more processors 506 may include, in some embodiments, at least one microprocessor or microcontroller. As another example, the one or more processors 506 may include, in some embodiments, a central processing unit (CPU), a graphics processing unit (GPU), a system-on-chip (SoC), a neural processing unit (NPU), a digital signal processor (DSP), an image signal processor (ISP), a secure enclave processor, another type of processor, or one or more combinations thereof.

In some embodiments, the electronic transactions associated operations 506A may correspond to providing an interface (e.g., electronic transactions interface 508A) for communications to one or more servers (e.g., server 106 of FIG. 1) associated with the policy-based reinforcement learning risk decision agent 110 of FIG. 1. By way of example, these communications may be associated with a payment provider system (e.g., payment provider system 104 of FIG. 1). As another example, these communications may be associated with an e-commerce platform (e.g., an e-commerce application or webpage). In some embodiments, the electronic transactions associated operations 506A may correspond to transmitting these communications (e.g., to the one or more servers).

Presentation component(s) 508 present data indications to a user or other device. Examples of presentation components may include a display device (e.g., a liquid crystal display or another type of display capable of rendering text or graphics, such as from web sites or applications), speaker, printing component, vibrating component, etc. In some embodiments, the electronic transactions interface 508A may be provided by the one or more processors 506 for the transmission of communications to one or more servers (e.g., server 106 of FIG. 1) associated with the policy-based reinforcement learning risk decision agent 110 of FIG. 1. For example, the electronic transactions interface 508A may receive particular inputs from a user for transmission to the one or more servers. The input may include a text-based signal, an audio signal, an image signal, etc., or one or more combinations thereof.

I/O ports 510 allow computing device 500 to be logically coupled to other devices including I/O components 512, some of which may be built in. Illustrative components include a microphone, joystick, game pad, satellite dish, scanner, printer, and so forth.

Embodiments described above may be combined with one or more of the specifically described alternatives. In particular, an embodiment that is claimed may contain a reference, in the alternative, to more than one other embodiment. The embodiment that is claimed may specify a further limitation of the subject matter claimed.

The subject matter of the present technology is described with specificity herein to meet statutory requirements. However, the description itself is not intended to limit the scope of this disclosure. Rather, the inventors have contemplated that the claimed or disclosed subject matter might also be embodied in other ways, to include different steps or combinations of steps similar to the ones described in this document, in conjunction with other present or future technologies. Moreover, although the terms "step" or "block" might be used herein to connote different elements of methods employed, the terms should not be interpreted as implying any particular order among or between various steps herein disclosed unless and except when the order of individual steps is explicitly stated.

For purposes of this disclosure, the word "including" or "having" has the same broad meaning as the word "comprising," and the word "accessing" comprises "receiving," "referencing," or "retrieving." Further, the word "communicating" has the same broad meaning as the word "receiving," or "transmitting" facilitated by software or hardware-based buses, receivers, or transmitters using communication media.

In addition, words such as "a" and "an," unless otherwise indicated to the contrary, include the plural as well as the singular. Thus, for example, the constraint of "a feature" is satisfied where one or more features are present. Additionally, an element in the singular may refer to "one or more."

The term "some" may refer to "one or more."

The term "or" includes the conjunctive, the disjunctive, and both *(a* or *b* thus includes either *a* or *b,* as well as *a* and *b).*

The term "user" as discussed herein may correspond to a human, a particular entity, a robot, another particular machine, etc.

The term "computer storage medium" excludes signals per se.

The phrase "one or more combinations thereof" may refer to, for example, "at least one of A, B, or C"; "at least one of A, B, and C"; "at least two of A, B, or C" (e.g., AA, AB, AC, BB, BA, BC, CC, CA, CB); "each of A, B, and C"; and may include multiples of A, multiples of B, or multiples of C (e.g., CCABB, ACBB, ABB, etc.). Other combinations may include more or less than three options associated with the A, B, and C examples.

Unless specifically stated otherwise, descriptors such as "first," "second," and "third," for example, are used herein without imputing or otherwise indicating any meaning of priority, physical order, arrangement in a list, or ordering in any way, but are merely used as labels to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly that might, for example, otherwise share a same name.

For purposes of a detailed discussion above, embodiments of the present technology described with reference to a distributed computing environment; however, the distributed computing environment depicted herein is merely an example. Components can be configured for performing novel aspects of embodiments, where the term "configured for" or "configured to" can refer to "programmed to" perform particular tasks or implement particular abstract data types using code. Further, while embodiments of the present technology may generally refer to the distributed data object management system and the described schematics, it is understood that the techniques described may be extended to other implementation contexts.

From the foregoing, it will be seen that this technology is one well adapted to attain all the ends and objects described above, including other advantages that are obvious or inherent to the structure. It will be understood that certain features and subcombinations are of utility and may be employed without reference to other features and subcombinations. This is contemplated by and is within the scope of the claims. Since many possible embodiments of the described technology may be made without departing from the scope, it is to be understood that all matter described herein or illustrated the accompanying drawings is to be interpreted as illustrative and not in a limiting sense.

Some example aspects of the technology that may be practiced from the forgoing disclosure include the following:
Aspect 1: A computer-implemented method comprising: receiving electronic transmission data for previous electronic transmissions; distinguishing pre-authorization electronic transmission data from the electronic transmission data at a later stage for each of the previous electronic transmissions; based on the distinguishing, providing current electronic transmission data to a neural network for determining a value of impropriety for the current electronic transmission; determining the value of impropriety for the current electronic transmission is above a threshold; and blocking the current electronic transmission based on the value of impropriety.
Aspect 2: Aspect 1, wherein the value of impropriety is determined by: training the neural network using the electronic transmission data including pre-authorization electronic transmission data and post-authorization electronic transmission data for the previous electronic transmissions including both fraudulent and non-fraudulent previous electronic transmissions; and analyzing, using the trained neural network, the current electronic transmission data for the current electronic transmission during a pre-authorization for the current electronic transmission; wherein the current electronic transmission is blocked based on the analyzing.
Aspect 3: Aspect 1 or 2, wherein Markov chain modeling is applied to each of the previous electronic transmissions for distinguishing the pre-authorization electronic transmission data from the post-authorization electronic transmission data.
Aspect 4: Aspect 1, 2, or 3, wherein the neural network is trained using the electronic transmission data including delay-captured electronic transmission data identified after the post-authorization electronic transmission data for the previous electronic transmissions including both the fraudulent and non-fraudulent previous electronic transmissions, and wherein the Markov chain modeling is applied to each of the previous electronic transmissions for distinguishing the delay-captured electronic transmission data from the pre-authorization electronic transmission data and the post-authorization electronic transmission data.
Aspect 5: Aspect 1, 2, 3, or 4, further comprising: identifying another electronic transmission corresponding to an electronic payment via an e-commerce platform; based on identifying the other electronic transmission, providing electronic transmission data, corresponding to the other electronic transmission, to the neural network for determining another value of impropriety for the other electronic transmission based on the electronic transmission data for the previous electronic transmissions corresponding to both fraudulent and non-fraudulent previous electronic transmissions; determining the other value of impropriety for the other electronic transmission is below the threshold; and facilitating the electronic payment based on the other value of impropriety being below the threshold.
Aspect 6: Aspect 1, 2, 3, 4, or 5, wherein the value of impropriety for the current electronic transmission is determined to be above the threshold after a pre-authorization for the current electronic transmission, and wherein the electronic transmission data for each of the previous electronic transmissions includes both pre-authorization electronic transmission data and post-authorization electronic transmission data associated with an electronic payment.
Aspect 7: Aspect 1, 2, 3, 4, 5, or 6, wherein the neural network is trained using reinforcement learning to determine the value of impropriety using the electronic transmission data for the previous electronic transmissions that are electronic payment transactions and that include both pre-authorization electronic transmission data and post-authorization electronic transmission data, the neural network being trained using a reward for subsequently blocking actual fraudulent electronic payment transactions during a pre-authorization stage associated with the actual fraudulent electronic payment transactions.
Aspect 8: Aspect 1, 2, 3, 4, 5, 6, or 7, further comprising: rewarding the neural network based on blocking the current electronic transmission, which is an electronic payment transaction, during the pre-authorization stage associated with the electronic payment transaction; and training the neural network using the reinforcement learning based on the current electronic transmission data including pre-authorization electronic transmission data and based on the reward for blocking the current electronic transmission.
Aspect 9: A computer system comprising: one or more processors; and a computer storage medium storing computer-useable instructions that, when used by the one or more processors, causes the computer system to perform operations comprising: receiving an indication of a current electronic payment transaction; based on the indication, providing electronic payment transaction data, corresponding to the current electronic payment transaction, to a neural network for determining a value of impropriety for the current electronic payment transaction, the neural network being trained using previous electronic payment transaction data for previous electronic payment transactions, the previous electronic payment transaction data including both pre-authorization electronic payment transaction data and post-authorization electronic payment transaction data; determining the value of impropriety for the current electronic payment transaction is above a threshold; and blocking the current electronic payment transaction based on the value of impropriety.
Aspect 10: Aspect 9, wherein the current electronic payment transaction is blocked during a pre-authorization stage.
Aspect 11: Aspect 9 or 10, further comprising applying Markov chain modeling to the previous electronic payment transaction data for each of the previous electronic payment transactions to distinguish the pre-authorization electronic payment transaction data from the post-authorization electronic payment transaction data and training the neural network based on the Markov chain modeling.
Aspect 12: Aspect 9, 10, or 11, wherein the neural network is trained using a reward function and reinforcement learning, such that the neural network is rewarded for blocking the current electronic payment transaction based on the value of impropriety.
Aspect 13: Aspect 9, 10, 11, or 12, wherein the reinforcement learning includes a punishment upon the neural network providing the value of impropriety below the threshold for a fraudulent electronic payment transaction during the pre-authorization stage.
Aspect 14: Aspect 9, 10, 11, 12 or 13, wherein the reinforcement learning includes another punishment, which is less severe than the punishment for the value of impropriety below the threshold for the fraudulent electronic payment transaction during the pre-authorization stage, upon the neural network providing the value of impropriety above the threshold for a non-fraudulent electronic payment transaction during the pre-authorization stage.
Aspect 15: One or more non-transitory computer storage media storing computer-useable instructions that, when used by one or more processors, cause the one or more processors to perform operations comprising: receiving an indication of a current electronic payment transaction; based on the indication, providing electronic payment transaction data, corresponding to the current electronic payment transaction, to a neural network for determining a value of impropriety for the current electronic payment transaction, the neural network being trained using previous electronic payment transaction data for previous electronic payment transactions, the previous electronic payment transaction data including post-authorization electronic payment transaction data; determining the value of impropriety for the current electronic payment transaction is above a threshold; and causing the current electronic payment transaction to be blocked based on the value of impropriety.
Aspect 16: Aspect 15, wherein the neural network is trained using the previous electronic payment transaction data including pre-authorization electronic payment transaction data and delay-captured electronic transmission data, such that the pre-authorization electronic payment transaction data is distinguished as a first stage of a previous electronic payment transaction, the post-authorization electronic payment transaction data is distinguished as a second stage of the previous electronic payment transaction, and the delay-captured electronic transmission data is distinguished as a third stage of the previous electronic payment transaction for each of the previous electronic payment transactions by applying Markov chain modeling before training the neural network.
Aspect 17: Aspect 15 or 16, wherein the previous electronic payment transactions used for training the neural network include both fraudulent and non-fraudulent previous electronic payment transactions, and wherein the current electronic payment transaction is blocked during the first stage.
Aspect 18: Aspect 15, 16, or 17, further comprising: receiving another indication of another electronic payment transaction associated with an e-commerce platform; based on the other indication, providing additional electronic payment transaction data, corresponding to the other electronic payment transaction, to the neural network for determining a second value of impropriety for the other electronic payment transaction; determining the second value of impropriety is below the threshold; and causing to facilitate electronic payment for the other electronic payment transaction based on the second value of impropriety being below the threshold.
Aspect 19: Aspect 15, 16, 17, or 18, further comprising causing application of reinforcement learning to the neural network in response to determining the value of impropriety and the second value of impropriety based on a reward for blocking the current electronic payment transaction and a second reward for facilitating the electronic payment for the other electronic payment transaction, the reward for blocking being a greater reward than the second reward.
Aspect 20: Aspect 15, 16, 17, 18, or 19, further comprising causing application of reinforcement learning to the neural network based on a punishment upon the neural network providing the value of impropriety that is below the threshold for a fraudulent electronic payment transaction.

## Claims

1. A computer-implemented method comprising:
receiving electronic transmission data for previous electronic transmissions;
distinguishing pre-authorization electronic transmission data from the electronic transmission data at a later stage for each of the previous electronic transmissions;
based on the distinguishing, providing current electronic transmission data to a neural network for determining a value of impropriety for the current electronic transmission;
determining the value of impropriety for the current electronic transmission is above a threshold; and
blocking the current electronic transmission during a pre-authorization stage based on the value of impropriety.

2. The computer-implemented method of claim 1, wherein the value of impropriety is determined by:
training the neural network using the electronic transmission data including the pre-authorization electronic transmission data and post-authorization electronic transmission data for the previous electronic transmissions including both fraudulent and non-fraudulent previous electronic transmissions; and
analyzing, using the trained neural network, the current electronic transmission data for the current electronic transmission during the pre-authorization stage for the current electronic transmission, such that the current electronic transmission is blocked during the pre-authorization stage based on the analyzing.

3. The computer-implemented method of claim 2, wherein Markov chain modeling is applied to each of the previous electronic transmissions for distinguishing the pre-authorization electronic transmission data from the post-authorization electronic transmission data,
wherein, optionally, the neural network is trained using the electronic transmission data including delay-captured electronic transmission data identified after the post-authorization electronic transmission data for the previous electronic transmissions including both the fraudulent and non-fraudulent previous electronic transmissions, and wherein the Markov chain modeling is applied to each of the previous electronic transmissions for distinguishing the delay-captured electronic transmission data from the pre-authorization electronic transmission data and the post-authorization electronic transmission data.

4. The computer-implemented method of any one of the preceding claims, further comprising:
identifying another electronic transmission corresponding to an electronic payment via an e-commerce platform;
based on identifying the other electronic transmission, providing electronic transmission data, corresponding to the other electronic transmission, to the neural network for determining another value of impropriety for the other electronic transmission based on the electronic transmission data for the previous electronic transmissions corresponding to both fraudulent and non-fraudulent previous electronic transmissions;
determining the other value of impropriety for the other electronic transmission is below the threshold; and
facilitating the electronic payment based on the other value of impropriety being below the threshold.

5. The computer-implemented method of any one of the preceding claims, wherein the electronic transmission data for each of the previous electronic transmissions includes both pre-authorization electronic transmission data and post-authorization electronic transmission data associated with an electronic payment.

6. The computer-implemented method of any one of the preceding claims, wherein the neural network is trained using reinforcement learning to determine the value of impropriety using the electronic transmission data for the previous electronic transmissions that are electronic payment transactions and that include both pre-authorization electronic transmission data and post-authorization electronic transmission data, the neural network being trained using a reward for subsequently blocking actual fraudulent electronic payment transactions during the pre-authorization stage associated with the actual fraudulent electronic payment transactions,
wherein the method optionally further comprises:
rewarding the neural network based on blocking the current electronic transmission, which is an electronic payment transaction, during the pre-authorization stage associated with the electronic payment transaction; and
training the neural network using the reinforcement learning based on the current electronic transmission data including pre-authorization electronic transmission data and based on the reward for blocking the current electronic transmission.

7. A computer system comprising:
one or more processors; and
a computer storage medium storing computer-useable instructions that, when used by the one or more processors, causes the computer system to perform operations comprising:
receiving an indication of a current electronic payment transaction;
based on the indication, providing electronic payment transaction data, corresponding to the current electronic payment transaction, to a neural network for determining a value of impropriety for the current electronic payment transaction, the neural network being trained using previous electronic payment transaction data for previous electronic payment transactions, the previous electronic payment transaction data including both pre-authorization electronic payment transaction data and post-authorization electronic payment transaction data;
determining the value of impropriety for the current electronic payment transaction is above a threshold; and
blocking the current electronic payment transaction based on the value of impropriety.

8. The computer system of claim 7, wherein the current electronic payment transaction is blocked during a pre-authorization stage,
wherein the computer system optionally further comprises applying Markov chain modeling to the previous electronic payment transaction data for each of the previous electronic payment transactions to distinguish the pre-authorization electronic payment transaction data from the post-authorization electronic payment transaction data and training the neural network based on the Markov chain modeling.

9. The computer system of claim 8, wherein the neural network is trained using a reward function and reinforcement learning, such that the neural network is rewarded for blocking the current electronic payment transaction based on the value of impropriety.

10. The computer system of claim 9, wherein the reinforcement learning includes a punishment upon the neural network providing the value of impropriety below the threshold for a fraudulent electronic payment transaction during the pre-authorization stage,
wherein, optionally, the reinforcement learning includes another punishment, which is less severe than the punishment for the value of impropriety below the threshold for the fraudulent electronic payment transaction during the pre-authorization stage, upon the neural network providing the value of impropriety above the threshold for a non-fraudulent electronic payment transaction during the pre-authorization stage.

11. One or more transitory or non-transitory computer storage media storing computer-useable instructions that, when used by one or more processors, cause the one or more processors to perform operations comprising:
receiving an indication of a current electronic payment transaction;
based on the indication, providing electronic payment transaction data, corresponding to the current electronic payment transaction, to a neural network for determining a value of impropriety for the current electronic payment transaction, the neural network being trained using previous electronic payment transaction data for previous electronic payment transactions, the previous electronic payment transaction data including post-authorization electronic payment transaction data;
determining the value of impropriety for the current electronic payment transaction is above a threshold; and
causing the current electronic payment transaction to be blocked based on the value of impropriety.

12. The one or more computer storage media of claim 11**,** wherein the neural network is trained using the previous electronic payment transaction data including pre-authorization electronic payment transaction data and delay-captured electronic transmission data, such that the pre-authorization electronic payment transaction data is distinguished as a first stage of a previous electronic payment transaction, the post-authorization electronic payment transaction data is distinguished as a second stage of the previous electronic payment transaction, and the delay-captured electronic transmission data is distinguished as a third stage of the previous electronic payment transaction for each of the previous electronic payment transactions by applying Markov chain modeling before training the neural network,
wherein, optionally, the previous electronic payment transactions used for training the neural network include both fraudulent and non-fraudulent previous electronic payment transactions, and wherein the current electronic payment transaction is blocked during the first stage.

13. The one or more computer storage media of claims **11** or 12, further comprising:
receiving another indication of another electronic payment transaction associated with an e-commerce platform;
based on the other indication, providing additional electronic payment transaction data, corresponding to the other electronic payment transaction, to the neural network for determining a second value of impropriety for the other electronic payment transaction;
determining the second value of impropriety is below the threshold; and
causing to facilitate electronic payment for the other electronic payment transaction based on the second value of impropriety being below the threshold.

14. The one or more computer storage media of claim 13, further comprising causing application of reinforcement learning to the neural network in response to determining the value of impropriety and the second value of impropriety based on a reward for blocking the current electronic payment transaction and a second reward for facilitating the electronic payment for the other electronic payment transaction, the reward for blocking being a greater reward than the second reward.

15. The one or more computer storage media of any one of claims 11 to 14, further comprising causing application of reinforcement learning to the neural network based on a punishment upon the neural network providing the value of impropriety that is below the threshold for a fraudulent electronic payment transaction.
